# EUROPÄISCHE PATENTSCHRIFT

(11) **EP 2 175 458 B1**
(45) Veröffentlichungstag und Bekanntmachung des Hinweises auf die Patenterteilung: **16.01.2013**
(21) Anmeldenummer: 09172539.0
(22) Anmeldetag: 08.10.2009
(51) Int. Cl.: H01F 7/08, H01F 7/16, H02K 33/00, G02B 7/08, G02B 23/24, H02K 41/02

(54) **Linearmotor zur Positionierung optischer Systeme**
Linear motor for positioning optical systems
Moteur linéaire destiné à positionner des systèmes optiques

(30) Priorität: 09.10.2008 DE 102008042701
(43) Veröffentlichungstag der Anmeldung: 14.04.2010
(73) Patentinhaber: Karl Storz GmbH & Co. KG, 78532 Tuttlingen (DE)
(72) Erfinder: Schrader, Stephan, 10117 Berlin (DE)
(74) Vertreter: Lohr, Georg

(56) Entgegenhaltungen:
- EP-A1- 1 463 186
- DE-A1- 3 717 872
- DE-A1- 10 323 629
- DE-A1- 19 618 355
- DE-A1- 19 900 788
- DE-U1- 20 000 397
- US-A- 5 478 650

## Beschreibung

### Technisches Gebiet

Die Erfindung betrifft einen Linearmotor zum Positionierung optischer Systeme, insbesondere für Linsensysteme in Endoskopen. Bei modernen Videoendoskopen sind ein Kamerachip sowie ein zugehöriges Linsensystem in die Endoskopspitze integriert. Zur Einstellung der Brennweite bzw. des Fokus des Linsensystems wird ein miniaturisierter Motor benötigt.

### Stand der Technik

Klassische Endoskope, wie sie beispielsweise für die minimalinvasive Chirurgie eingesetzt werden können, führen das Bild mittels Stablinsen vom intrakorporalen Objektiv zum extrakorporalen Okular. Durch die Stablinsen ist das System starr und in der optischen Qualität begrenzt. Moderne Videoendoskope verwenden einen Kamerachip in der Endoskopspitze. Ein solches Endoskop ist in der US 7,365,768 B1 offenbart. Dieses hat vor dem Kamerachip eine starr angeordnete Linse. Eine Einstellung der Brennweite der Linse ist nicht möglich.

Die DE 196 18 355 C2 zeigt einen in Endoskope integrierbaren Linearantrieb zum Einstellen der Brennweite eines Linsensystems. Dazu wird ein Permanentmagnet als Läufer innerhalb einer Statorspule bewegt. Der Linearantrieb ist wegen der großen Masse des Permanentmagneten jedoch träge. Der Zusammenhang zwischen dem Spulenstrom und der Läuferposition ist nicht eindeutig und macht einen zusätzlichen Wegsensor mit Lageregelung notwendig.

Die DE 37 17 872 C2 offenbart einen Antrieb mit einem Läufer und einem Stator für ein Linsensystem in Videokameras. Der Läufer besteht aus zwei Eisenhülsen, welche durch einen Träger zur Aufnahme des Linsensystems miteinander verbunden sind. Der Stator hat zwei Spulen sowie einen einzigen ringförmigen Magneten zur Erzeugung der für die Bewegung notwendigen Magnetfelder. Der komplexe Aufbau des Antriebs kann bei Videokameras mit Linsendurchmessern im Zentimeterbereich gut realisiert werden, ist aber nicht auf die für endoskopische Anwendungen benötigte Größe im Millimeterbereich skalierbar.

In der DE 199 00 788 A1 ist ein Linearantrieb für ein Ventil mit Permanentmagneten, einer Spule und einem massiven Anker zur Betätigung des Ventils offenbart.

In der JP 57-076805 A ist ein weiterer Linearantrieb mit Permanentmagneten, einer Spule und einem massiven Anker offenbart. Der magnetische Fluss verläuft hier zwischen einer Endplatte der Spule und dem Anker über einen positionsabhängigen Luftspalt. Dadurch ergibt sich eine starke Nichtlinearität der Kraft und somit der Auslenkung.

DE 103 23 629 A1, DE 37 17 872 A1 offenbaren weitere Linearmotoren zur Positionierung optischer Systeme, In DE 103 23 629 A1 sind die Permanentmagnete im Läufer angeordnet. In DE 37 17 872 A1 ist im Stator ein Permanentmagnet zwischen zwei Spulen angeordnet.

DE 200 00 397 U1 (Fig.1-6, 9, 10), DE 199 00 788 A1 (Fig.1, 2) und EP 1 463 186 A1 (Fig.8-10, 52) offenbaren Linearmotoren bei denen im Stator eine Spule zwischen zwei Permanentmagneten angeordnet ist. Die Linearmotoren dienen jedoch zum Antrieb für Systeme mit einem massiven Schaft (Eisenkern) als Läufer.

### Darstellung der Erfindung

Der Erfindung liegt die Aufgabe zugrunde, einen Linearmotor zur Positionierung optischer Systeme mit derart kleinen Abmessungen zu schaffen, dass dieser in Endoskopen eingesetzt werden kann. Weiterhin soll der Linearmotor eine definierte Nullpunktlage sowie eine reproduzierbare Auslenkung in Abhängigkeit vom Ansteuersignal aufweisen. Zudem soll der Linearmotor eine schnelle, kontinuierliche und exakte Positionierung des optischen Systems in einem möglichst großen Bereich ermöglichen. Dabei darf der Strahlengang durch das optische System beim Verschieben der Komponenten nicht blockiert werden. Die Verlustleistung des Linearmotors soll gering sein, so dass wenig Wärme in der Spitze eines Endoskops entsteht. Für eine einfache Fertigung und Montage soll der Antrieb aus möglichst wenigen und geometrisch einfachen Einzelbauteilen zusammengesetzt sein.

Diese Aufgabe ist durch einen Linearmotor nach Anspruch 1 bzw. 2 gelöst. Weiterbildungen des Linearmotors sind in den abhängigen Ansprüchen angegeben.

Der Linearmotor zur Positionierung optischer Systeme nach Anspruch 1 umfasst
- einen Stator mit einer Mittelachse, einem ersten radial zur Mittelachse magnetisierten Permanentmagneten und einem zweiten radial zur Mittelachse magnetisierten und gleichsinnig gepolten Permanentmagneten, die durch ein Rückschlusselement magnetisch miteinander verbunden sind, und einer Spule zwischen dem ersten Permanentmagneten und dem zweiten Permanentmagneten, und
- einen parallel zum Stator verschiebbaren Läufer, mit wenigstens einem auf der dem Rückschlusselement abgewandten Seite des Stators angeordneten hohlzylindrischen Joch, welches in magnetischem Eingriff mit dem ersten Permanentmagneten und dem zweiten Permanentmagneten steht, wobei im Inneren des Jochs ein optisches Element aufgenommen werden kann.

Der Linearmotor zur Positionierung optischer Systeme nach Anspruch 2 umfasst
- einen Stator mit einer Mittelachse, einem ersten axial magnetisierten Permanentmagneten und einem zweiten axial magnetisierten und gegensinnig gepolten Permanentmagneten, und einer Spule zwischen dem ersten Permanentmagneten und dem zweiten Permanentmagneten, und
- einem parallel zum Stator verschiebbaren Läufer, mit wenigstens einem hohlzylindrischen Joch, welches in magnetischem Eingriff mit dem ersten Permanentmagneten und dem zweiten Permanentmagneten steht, wobei im Inneren des Jochs ein optisches Element aufgenommen werden kann.

Der Linearmotor ist bevorzugt rotationssymmetrisch mit ringförmigen Polschuhen, Magneten sowie einer ringförmigen Spule. Der Läufer und insbesondere dessen Joch sind hohlzylindrisch, d.h. sie haben die Form einer zylindrischen Hülse. Der Strahlengang eines optischen Systems kann dann durch die Hülse, d.h. das Joch verlaufen. Insbesondere kann eine Linse oder ein anderes optisches Element in der Hülse sitzen. Somit kann durch eine Verschiebung der Hülse die Brennweite und/oder auch der Fokus des optischen Systems eingestellt werden.

Da das Magnetfeld der Spule im Falle das Linearmotors nach Anspruch 1 durch das Rückschlußelement und durch das Joch verläuft, sollen das Rückschlußelement und das Joch selbst keinen Luftspalt aufweisen.

Der Linearmotor ermöglicht zwischen zwei Endstellungen eine exakte Einstellung der Position des Läufers bzw. des Jochs relativ zum Stator. Bei dem Linearmotor entspricht jedem Spulenstrom eine eindeutige Position des Läufers in Bezug zum Stator. Somit kann durch eine Einstellung des Spulenstromes der Läufer in dem Verfahrbereich kontinuierlich verschoben werden. Durch diese eindeutige Zuordnung zwischen dem Spulenstrom und der Läuferposition kann auf die nach dem Stand der Technik notwendige Wegmessung zur Positionsbestimmung des Läufers verzichtet werden. Der hier beschriebene Linearmotor hat keine Permanentmagnete im Läufer, der im einfachsten Fall nur aus dem Joch besteht. Deshalb hat der Läufer eine sehr geringe Masse und kann sehr schnell zwischen zwei Positionen verfahren werden. Der Linearmotor kann mit einem freien Mitteldurchgang beispielsweise rotationssymmetrisch aufgebaut werden. Der Strahlengang des optischen Systems kann durch den Mitteldurchgang verlaufen und dort angebrachte optische Komponenten, wie z.B. Linsen können linear verschoben werden. Die Einzelbauteile haben eine einfache Geometrie (Ringe, Hülsen) und sind deshalb einfach herstell- und montierbar.

Der Linearmotor ist bis zu einer Größe von wenigen Millimetern Außendurchmesser problemlos miniaturisierbar. Die Verfahrstrecke zwischen den beiden Endstellungen des Läufers liegt bei einem Motor mit wenigen Millimetern Außendurchmesser typischerweise bei etwa 1 bis 3 mm.

Die Spule kann wahlweise auf einen Spulenkörper oder auch ohne Spulenkörper gewickelt sein.

Zur besseren Steuerung des magnetischen Flusses ist es vorteilhaft, wenn ein erster Polschuh und ein zweiter Polschuh jeweils auf einer Seite der Spule angeordnet und mit dem Rückschlußelement verbunden sind. Das Joch und die Polschuhe müssen immer ferromagnetische und/oder weichmagnetische Materialien umfassen.

Eine detaillierte Darstellung der Funktion des Motors findet sich in der Beschreibung der Figuren.

Es ist besonders vorteilhaft, wenn die Permanentmagnete zwischen den Polschuhen angeordnet sind. Besonders günstig ist, wenn die Länge des Jochs kleiner oder gleich dem Mittenabstand der Polschuhe ist.

In einer weiteren vorteilhaften Ausgestaltung der Erfindung sind die Permanentmagnete außerhalb der Polschuhe angeordnet.

In einer weiteren vorteilhaften Ausgestaltung der Erfindung ist zwischen dem Stator und dem Läufer eine Gleitschicht. Diese kann insbesondere im Falle einer rotationssymmetrischen Anordnung als Gleithülse ausgeführt sein. Um die Magnetfelder möglichst wenig zu beeinflussen soll die Gleitschicht aus einem nicht magnetfeldführenden Material, insbesondere aus einem nicht- ferromagnetischen Material bestehen. Ihre Oberfläche umfasst bevorzugt ein Material mit niedrigem Reibungskoeffizienten, beispielsweise PTFE (Polytetrafluorethylen) oder DLC (diamond like carbon) wie beispielsweise in der US 5,478,650 offenbart.

Die Gleitschicht kann Unebenheiten auf der dem Läufer zugewandten Seite des Stators ausgleichen.

Durch die Gleitschicht wird ein konstanter minimaler magnetischer "Luftspalt" des magnetischen Kreises zwischen den Komponenten des Stators und dem Läufer sichergestellt. Dieser minimale "Luftspalt" ist für die Funktion des Linearmotors zwingend notwendig, weil ein auf einem der Permanentmagneten oder einem Polschuh aufliegendes Joch einen magnetischen Kurzschluss verursachen würde.

In einer weiteren Ausgestaltung der Erfindung kann das Joch des Läufers auch länger (in Bezug auf dessen Bewegungsrichtung) als der Stator ausgeführt werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.

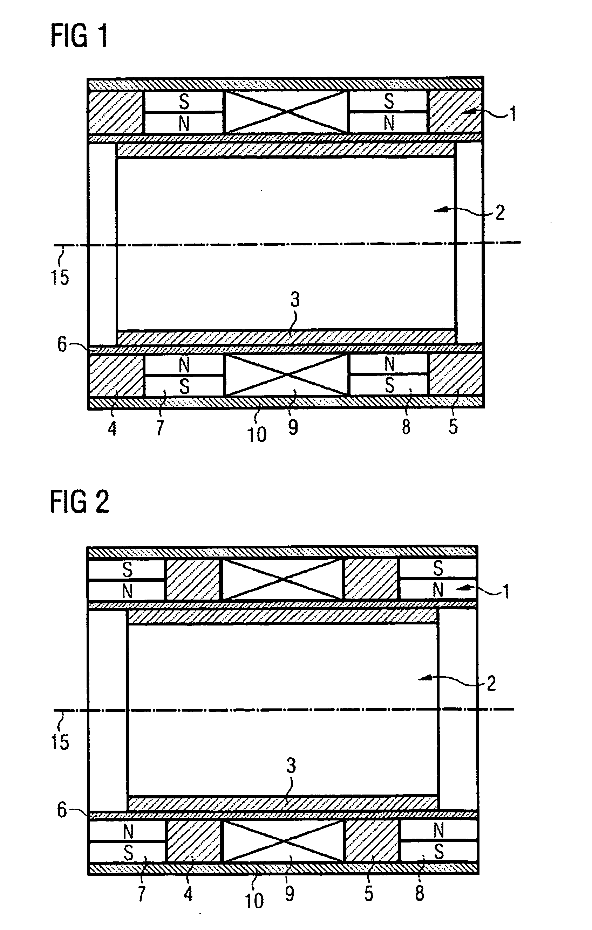

Figur 1 zeigt schematisch einen Linearmotor mit radialen Permanentmagneten,
Figur 2 zeigt einen weiteren Linearmotor,

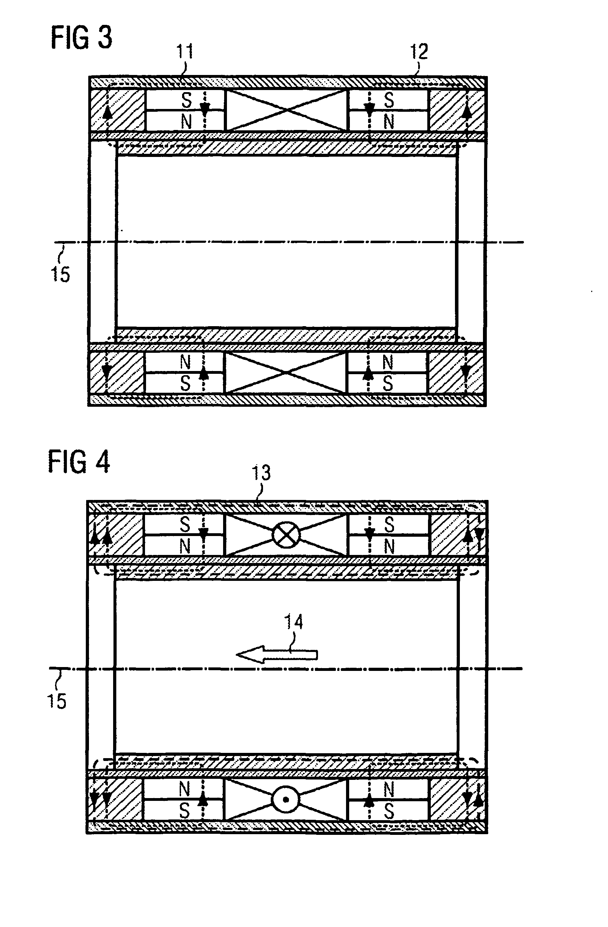

Figur 3 zeigt den Feldverlauf im Linearmotor nach Fig. 1 mit stromloser Spule,
Figur 4 zeigt den Feldverlauf des Linearmotors aus Fig. 3 mit stromdurchflossener Spule.

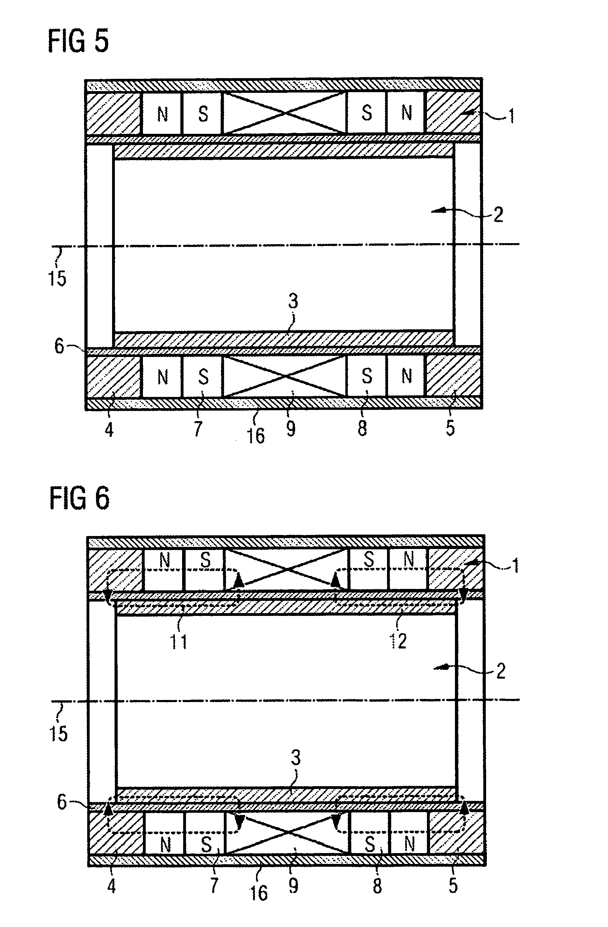

Figur 5 zeigt schematisch einen Linearmotor mit axialen Permanentmagneten,
Figur 6 zeigt den Feldverlauf im Linearmotor nach Fig. 5 mit stromloser Spule,

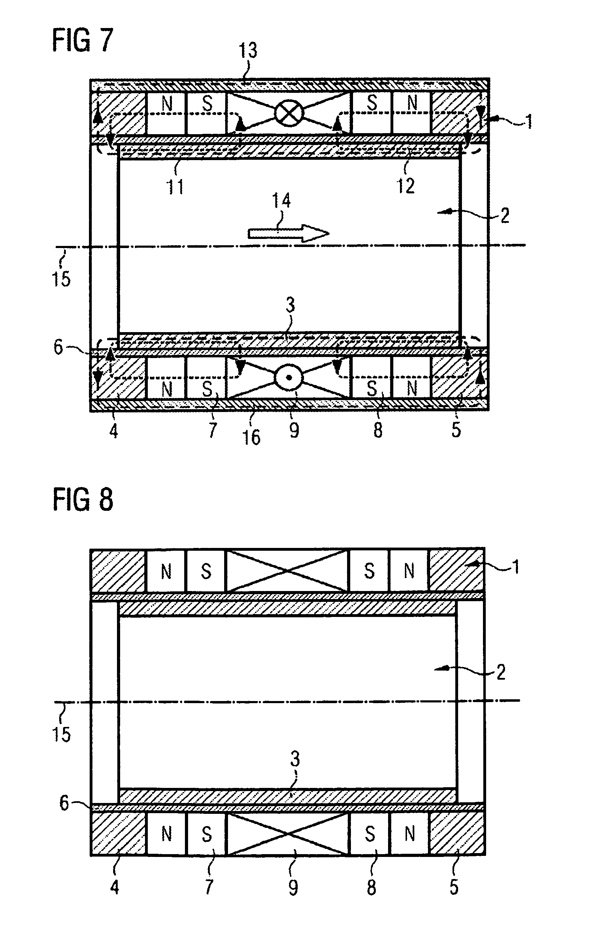

Figur 7 zeigt den Feldverlauf im Linearmotor nach Fig. 5 mit stromdurchflossener Spule,
Figur 8 zeigt schematisch einen weiteren Linearmotor mit axialen Permanentmagneten,

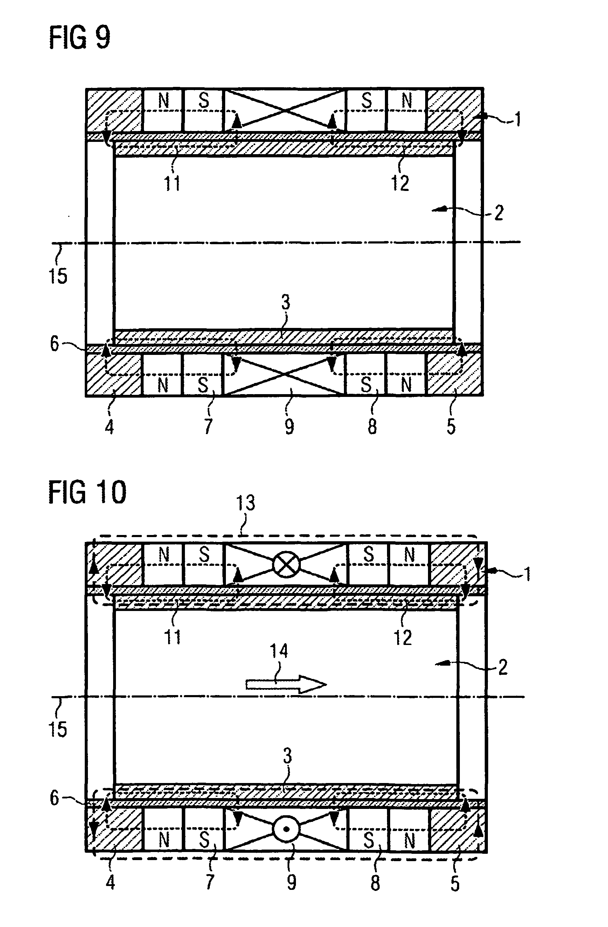

Figur 9 zeigt den Feldverlauf im Linearmotor nach Fig. 8 mit stromloser Spule,
Figur 10 zeigt den Feldverlauf im Linearmotor nach Fig. 8 mit stromdurchflossener Spule.

Figur 1 zeigt schematisch ein Ausführungsbeispiel einer erfindungsgemäßen Anordnung in zylindrischer Bauform. Der Stator umfasst ein Rückschlußelement 10 in Form eines weichmagnetischen Rückschlussrohrs, in dessen Bohrung axial versetzt zwei weichmagnetische Polschuhe 4, 5 sowie zwei radial und gleichsinnig magnetisierte Permanentmagnetringe 7, 8 und eine zentrale Spule 9 angeordnet sind. Eine Gleithülse 6 schließt hier den Stator 9 nach innen ab und stellt eine Gleitschicht für den Läufer zur Verfügung. Die Gleithülse muss aus einem nicht- ferromagnetischen Material bestehen. Der Läufer 2 umfasst hier ein Joch 3, in dessen Bohrung ein zu positionierendes Element, wie eine optische Komponente, eingebracht werden kann. Der Läufer ist axial in beide Richtungen innerhalb der Gleithülse verschiebbar. Die Mittelachse 15 ist bei rotationssymmetrisch aufgebauten Anordnungen auch die Rotationsachse.

Figur 2 zeigt eine weitere Ausgestaltung der Erfindung, bei der die Polschuhe und die Permanentmagnete miteinander vertauscht sind. Die Funktion ist entsprechend.

Figur 3 zeigt eine Darstellung der Erfindung mit den magnetischen Kreisen im Ruhezustand bei stromloser Spule.

Die Permanentmagnete erzeugen jeweils einen magnetischen Fluss 11, 12, der vom Nordpol eines jeden Magneten 7, 8 ausgehend durch das Joch 3 hindurch und jeweils radial nach außen über die Polschuhe 4, 5 des Stators fließt, um von dort in Richtung Statormitte über das Rückschlußelement 10 zum Südpol zu gelangen. Hier muss der Läufer kürzer als der Mittenabstand der beiden Polschuhe 4, 5 sein. Auf diese Weise entsteht in mittiger Läuferstellung jeweils ein Luftspalt zwischen dem Joch 3 und dem jeweiligen Polschuh 4, 5, der für die beiden magnetischen Kreise 11, 12 einen magnetischen Widerstand darstellt. Die beiden magnetischen Kreise 11, 12 sind bestrebt, die Länge ihres jeweiligen Luftspalts zu minimieren, um somit den jeweiligen magnetischen Widerstand des Kreises zu minimieren. Dabei treten in beiden magnetischen Kreisen sogenannte Reluktanzkräfte auf, die bestrebt sind, das jeweilige Ende des Jochs 3 axial in Richtung des jeweiligen Polschuhs 4 ,5 zu ziehen und den Luftspalt und damit den magnetischen Widerstand zu reduzieren. Der geringste magnetische Widerstand eines Kreises ist erreicht, wenn das Joch 3 vollständig in den entsprechenden Polschuh 4, 5 eingetaucht ist. In mittiger Stellung des Jochs sind die Luftspalte und damit die Reluktanzkräfte der beiden Kreise gleich groß. Bei geeigneter Auslegung der Länge des Jochs 3 sowie der axialen Längen der Komponenten des Stators ergibt sich dann eine stabile zentrale Position des Läufers

Wird das Joch 3 in Folge extern wirkender Kräfte, beispielsweise Beschleunigungskräfte, in eine seiner beiden Bewegungsrichtungen aus dieser stabilen Position herausgedrängt, so wirken rücktreibende Kräfte, die das Joch 3 in die zentrale Position zurückdrängen. Die Reluktanzkräfte halten das Joch 3 vergleichbar zu einer mechanischen Feder in dieser Position.

Figur 4 zeigt nun die magnetischen Kreise bei bestromter Spule.

Wird nun die Spule 9 mit der in Abbildung 4 gekennzeichneten Richtung bestromt, das heißt mit Strom durchflossen, so fließt der Strom in der oberen Hälfte der Querschnittsfläche in die Bildebene hinein und in der unteren aus ihr heraus. In der oberen Querschnittsfläche bildet sich nun ein durch den Strom erzeugter magnetischer Kreis 13 um die Spule 9, der gegen den Uhrzeigersinn orientiert ist und bestrebt ist, durch die Weicheisenbauteile, wie das Joch 3, die Polschuhe 4, 5 und das Rückschlußelement 10 zu fließen. Der Magnetkreis der Spule schließt sich daher über das Joch 3 des Läufers, die beiden äußeren Polschuhe 4, 5 und das Rückschlußelement 10 des Stators. Dieser elektrisch erzeugte magnetische Kreis 13 überlagert sich nunmehr mit den beiden magnetischen Kreise 11, 12 der Permanentmagnete innerhalb der weichmagnetischen Bauteile und wirkt dabei verstärkend auf den linken und schwächend auf den rechten Kreis. Der größere magnetische Fluss des linken Magnetkreises erzeugt eine größere anziehende Reluktanzkraft auf das Joch 3 als der rechte Kreis. Dies hat eine Verschiebung des Läufers in Richtung des stärkeren linken Magnetkreises zur Folge. Mit steigender Stromstärke durch die Spule nehmen die Stärkung des linken und die Schwächung des rechten permanentmagnetischen Kreises und damit auch die Verschiebung des Jochs 3 bzw. des Läufers zu. Es besteht somit eine eindeutige Zuordnung zwischen Stromstärke und Läuferposition. Eine Umkehr der Stromrichtung bewirkt eine Verschiebung des Jochs 3 in die entgegengesetzte Richtung. Bei symmetrischem Aufbau sind die Bewegungseigenschaften in beide Richtungen identisch. Entscheidend für die Antriebseigenschaften ist weiterhin, dass die Position des Jochs 3 auch in der der Stromstärke entsprechenden Sollposition stabil ist. Der maximale Hub in jeder Richtung ist je nach Auslegung des Stators etwa dann erreicht, wenn das Joch 3 den in Bewegungsrichtung liegenden Polschuh 4, 5 vollständig überdeckt und der Luftspalt in diesem Magnetkreis nicht weiter reduziert werden kann.

Die radiale Polungsrichtung der Magnete lässt sich auch umkehren. Hierdurch kehrt sich die Bewegungsrichtung bei gegebenem Strom im Vergleich zum bisher beschriebenen Aufbau um. Entscheidend für die Funktionstüchtigkeit des Linearmotors ist lediglich, dass beide Magnete radial gleichartig magnetisiert sind.

Ähnlich zu der hier abgebildeten Ausführungsform kann auch das Joch über die äußeren Polschuhe des Stators hinausragen. In diesem Fall wirken die beidseitigen Reluktanzkräfte der beiden magnetischen Kreise 11 und 12 nicht axial jeweils nach außen ziehend, wie zuvor beschrieben, sondern jeweils zur Statormitte hin drückend.

Gleichwohl bleiben die charakteristischen Merkmale des Linearmotors unverändert. Das Joch 3 verfügt weiterhin über eine stabile Mittelposition im stromlosen Zustand und lässt sich abhängig von der Stromstärke und der Stromrichtung kontinuierlich auslenken.

Figur 5 zeigt schematisch einen Linearmotor ähnlich zu Fig. 1. Hier sind jedoch die Permanentmagnete 7, 8 axial, d.h. parallel zur Mittelachse 15 ausgerichtet. Damit übernehmen die Permanentmagnete auch die Funktion des Rückschlußelements. Hier ist anstelle des Rückschlußelements 10 ein Außenrohr 16 vorgesehen, das die übrigen Bauteile des Stators des Linearmotors hält. Das Außenrohr 16 ist bevorzugt aus nicht- ferromagnetischem Material, um die Permanentmagnete nicht kurzzuschließen.

Figur 8 zeigt den Linearmotor aus Figur 5, jedoch ohne das Außenrohr 16.

Die Figuren 6 und 9 zeigen den Feldverlauf der Linearmotoren aus den Figuren 5 und 8 bei stromloser Spule.

Die Figuren 7 und 10 zeigen den Feldverlauf der Linearmotoren aus den Figuren 5 und 8 bei stromdurchflossener Spule.

### Bezugszeichenliste

- 1: Stator
- 2: Läufer
- 3: Joch
- 4: Erster Polschuh
- 5: Zweiter Polschuh
- 6: Gleitschicht
- 7: Erster Permanentmagnet
- 8: Zweiter Permanentmagnet
- 9: Spule
- 10: Rückschlußelement
- 11: Erster magnetischer Kreis
- 12: Zweiter magnetischer Kreis
- 13: Elektromagnetischer Kreis
- 14: Bewegungsrichtung
- 15: Mittelachse
- 16: Außenrohr

## Patentansprüche

1. Linearmotor zur Positionierung optischer Systeme umfassend
einen Stator (1) mit einer Mittelachse (15), einem ersten radial zur Mittelachse (15) magnetisierten Permanentmagneten (7) und einem zweiten radial zur Mittelachse (15) magnetisierten und gleichsinnig gepolten Permanentmagneten (8), die durch ein Rilckschlußelement (10) magnetisch miteinander verbunden sind,
einer Spule (9) zwischen dem ersten Permanentmagneten (7) und dem zweiten Permanentmagneten (8), und
einem parallel zum Stator verschiebbaren Läufer (2), mit wenigstens einem auf der dem Rückschlußelement (10) abgewandten Seite des Stators angeordneten hohlzylindrischen Joch (3), welches in magnetischem Eingriff mit dem ersten Permanentmagneten (7) und dem zweiten Permanentmagneten (8) steht, wobei im Inneren des Jochs (3) ein optisches Element aufgenommen werden kann.

2. Linearmotor zur Positionierung optischer Systeme umfassend
einen Stator (1) mit einer Mittelachse (15), einem ersten axial magnetisierten Permanentmagneten (7) und einem zweiten axial magnetisierten und gegensinnig gepolten Permanentmagneten (8),
einer Spule (9) zwischen dem ersten Permanentmagneten (7) und dem zweiten Permanentmagneten (8), und
einem parallel zum Stator verschiebbaren Läufer (2), mit wenigstens einem hohlzylindrischen Joch (3), welches in magnetischem Eingriff mit dem ersten Permanentmagneten (7) und dem zweiten Permanentmagneten (8) steht, wobei im Inneren des Jochs (3) ein optisches Element aufgenommen werden kann.

3. Linearmotor nach Anspruch 1,
**dadurch gekennzeichnet, dass**
der Stator einen ersten Polschuh (4) und einen zweiten Polschuh (5) jeweils auf einer Seite der Spule (9), mit dem Rückschlußelement (10) verbunden umfasst.

4. Linearmotor nach Anspruch 2,
**dadurch gekennzeichnet, dass**
der Stator einen ersten Polschuh (4) und einen zweiten Polschuh (5) jeweils auf einer Seite der Spule (9) umfasst.

5. Linearmotor nach Anspruch 3 oder 4,
**dadurch gekennzeichnet, dass**
die Permanentmagnete (7, 8) innerhalb eines Zwischenraumes zwischen den Polschuhen (4, 5) angeordnet sind.

6. Linearmotor nach Anspruch 5,
**dadurch gekennzeichnet, dass**
die Länge des Jochs (3) kleiner oder gleich dem Mittenabstand der Polschuhe (4, 5) ist.

7. Linearmotor nach Anspruch 3,
**dadurch gekennzeichnet, dass**
die Permanentmagnete (7, 8) außerhalb der Polschuhe (4, 5) angeordnet sind.

8. Linearmotor nach einem der vorhergehenden Ansprüche,
**dadurch gekennzeichnet, dass**
der Läufer rotationssymmetrisch ist.

9. Linearmotor nach einem der vorhergehenden Ansprüche,
**dadurch gekennzeichnet, dass**
eine Gleithülse (6) mit einem Material mit niedrigem Reibungskoeffizienten an der Oberfläche zwischen Stator (1) und Läufer (2) angeordnet ist.

## Claims

1. Linear motor for positioning optical systems, comprising:
a stator (1) having a centre axis (15),
a first permanent magnet (7) magnetized radially from the centre axis (15), and a second permanent magnet (8) magnetized radially from the centre axis (15) and
polarized in the same direction, the permanent magnets being magnetically interconnected by a flux return element (10),
a coil (9) disposed between the first permanent magnet (7) and the second permanent magnet (8), and
a slider (2) adapted to be displaced parallel to the stator, the slider having at least one hollow-cylindrical yoke (3) disposed on a side of the stator facing away from the flux return element (10), which yoke is in magnetic engagement with the first permanent magnet (7) and the second permanent magnet (8), wherein an optical element can be accommodated inside the yoke (3).

2. Linear motor for positioning optical systems, comprising:
a stator (1) having a centre axis (15),
a first axially magnetized permanent magnet (7) and a second axially magnetized permanent magnet (8) polarized in the opposite direction,
a coil (9) disposed between the first permanent magnet (7) and the second permanent magnet (8), and
a slider (2) adapted to be displaced parallel to the stator, the slider having at least one hollow-cylindrical yoke (3) that is in magnetic engagement with the first permanent magnet (7) and the second permanent magnet (8), wherein an optical element can be accommodated inside the yoke (3).

3. Linear motor according to claim 1
**characterized in that**
the stator comprises a first pole piece (4) and a second pole piece (5), each being connected to the flux return element (10) on a respective side of the coil (9).

4. Linear motor according to claim 2,
**characterized in that**
the stator comprises a first pole piece (4) and a second pole piece (5), each on a respective side of the coil (9).

5. Linear motor according to claim 3 or 4,
**characterized in that**
the permanent magnets (7, 8) are disposed within an intermediate space between the pole pieces (4, 5).

6. Linear motor according to claim 5,
**characterized in that**
the length of the yoke (3) is less than or equal to the distance between the centres of the pole pieces (4, 5).

7. Linear motor according to claim 3,
**characterized in that**
the permanent magnets (7, 8) are disposed outside the pole pieces (4, 5).

8. Linear motor according to any one of the preceding claims,
**characterized in that**
the slider is rotationally symmetric.

9. Linear motor according to any one of the preceding claims,
**characterized in that**
a slide-sleeve (6) having a material of low coefficient of friction at its surface is disposed between the stator (1) and the slider (2).

## Revendications

1. Moteur linéaire pour le positionnement de systèmes optiques comprenant un stator (1) avec un axe médian (15), un premier aimant permanent (7) magnétisé dans le sens radial par rapport à l'axe médian (15) et un deuxième aimant permanent (8) magnétisé dans le sens radial par rapport à l'axe médian (15) et ayant la même orientation des pôles, qui sont reliés entre eux magnétiquement par un élément de retour (10),
un enroulement (9) entre le premier aimant permanent (7) et le deuxième aimant permanent (8), et
une glisse (2) mobile parallèlement au stator, avec au moins une culasse (3) cylindrique creuse disposée du côté du stator opposé à l'élément de retour (10), qui est en engagement magnétique avec le premier aimant permanent (7) et avec le deuxième aimant permanent (8), un élément optique pouvant être logé à l'intérieur de la culasse (3).

2. Moteur linéaire pour le positionnement de systèmes optiques comprenant un stator (1) avec un axe médian (15), un premier aimant permanent (7) magnétisé dans le sens axial et un deuxième aimant permanent (8) magnétisé dans le sens axial et ayant une orientation des pôles opposée,
un enroulement (9) entre le premier aimant permanent (7) et le deuxième aimant permanent (8), et
une glisse (2) mobile parallèlement au stator, avec au moins une culasse (3) cylindrique creuse qui est en engagement magnétique avec le premier aimant permanent (7) et avec le deuxième aimant permanent (8), un élément optique pouvant être logé à l'intérieur de la culasse (3).

3. Moteur linéaire selon la revendication 1, **caractérisé en ce que** le stator comprend un premier épanouissement polaire (4) et un deuxième épanouissement polaire (5) chacun d'un côté de l'enroulement (9), reliés à l'élément de retour (10).

4. Moteur linéaire selon la revendication 2, **caractérisé en ce que** le stator comprend un premier épanouissement polaire (4) et un deuxième épanouissement polaire (5) chacun sur un côté de l'enroulement (9).

5. Moteur linéaire selon la revendication 3 ou 4, **caractérisé en ce que** les aimants permanents (7, 8) sont disposés à l'intérieur d'un espace formé entre les épanouissements polaires (4, 5).

6. Moteur linéaire selon la revendication 5, **caractérisé en ce que** la longueur de la culasse (3) est inférieure ou égale à l'écart entre les centres des épanouissements polaires (4, 5).

7. Moteur linéaire selon la revendication 3, **caractérisé en ce que** les aimants permanents (7, 8) sont disposés à l'extérieur des épanouissements polaires (4, 5).

8. Moteur linéaire selon l'une des revendications précédentes, **caractérisé en ce que** le rotor est symétrique par rapport à son axe de rotation.

9. Moteur linéaire selon l'une des revendications précédentes, **caractérisé en ce qu'**une douille mobile (6) faite d'un matériau ayant un coefficient de frottement moins élevé en surface est disposée entre le stator (1) et la glisse (2).
